# EUROPEAN PATENT APPLICATION

(11) **EP 3 537 554 A1**
(43) Date of publication of application: **11.09.2019**
(21) Application number: 18160772.2
(22) Date of filing: 08.03.2018
(51) Int. Cl.: H02J 3/18, H02J 9/04

(54) **AUTOTRANSFORMER FOR UNINTERRUPTIBLE POWER SUPPLY**

(71) Applicant: Hitec Power Protection B.V., 7602 KB Almelo (NL)
(72) Inventor: KRISTO, Mario, 7417 ZP Deventer (NL)
(74) Representative: Mink-Lindenburg, Charlotte Hildegard

(57) **Abstract**

The invention relates to a device for use in an uninterrupted supply of alternating current to one or more power consuming appliances, which device is provided with a first connecting point intended for electrical connection of the device to a mains supply, which device comprises a reactor comprising a primary and secondary coil around a shared magnetic core, wherein the primary coil and secondary coil are connected in series, a first terminal is connected to an open end of the primary coil, a second terminal is connected to an open end of the secondary coil and a third terminal is connected to the connecting ends of the primary and secondary coil, a second connecting point for connecting the one or more power consuming appliances, wherein the first terminal of the reactor is connected to the first connecting point of the device and the second terminal provides a connection point for connecting an AC generator.

It is an object of the invention to provide a device according to the preamble with an increased power efficiency.

## Description

The invention relates to a device for use in an uninterrupted supply of alternating current to one or more power consuming appliances, which device is provided with a first connecting point intended for electrical connection of the device to a mains supply, which device comprises a reactor comprising a primary and secondary coil around a shared magnetic core, wherein the primary coil and secondary coil are connected in series, a first terminal is connected to an open end of the primary coil, a second terminal is connected to an open end of the secondary coil and a third terminal is connected to the connecting ends of the primary and secondary coil, a second connecting point for connecting the one or more power consuming appliances, wherein the first terminal of the reactor is connected to the first connecting point of the device and the second terminal provides a connection point for connecting an AC generator.

Such a device in combination with an energy accumulator and/or emergency power aggregate is known in the field and is referred to as a UPS (Uninterruptible Power Supply) system. The known device is described in the Netherlands patent PCT/NL2011/050162, which disclosure in hereby included by reference.

In normal operation or power conditioning mode of the device, the UPS is fed by the mains supply, wherein the reactor transports the delivered power of the mains supply to the one or more consuming appliances.

The known device provides an increased power efficiency compared to former devices known in the field, since less reactive power is consumed by the reactor.

Since the AC generator needs to deliver less power, the currents in the AC generator decrease which results in a reduction of losses in the AC generator.

Also it is hereby possible to apply a smaller AC generator, thereby increasing the system efficiency of the device. Owing to the smaller AC generator, the weight of the device is also decreased and the dimensions made smaller, making positioning of the device more flexible. The reactor can take a single-phase as well as a three-phase form.

It is an objective of the invention to achieve, compared to the known device, a further increase of the power efficiency.

The device according to the invention has for this purpose the feature that the primary coil and secondary coil have opposite polarity. This has the surprising effect that the magnetic field created by current flowing through the primary coil is reduced by the magnetic field created by current flowing through the secondary coil. During normal operation of the device, the reactor therefore consumes less reactive power than the reactor of the known device. This results in a better power efficiency of the UPS.

The invention will now be further elucidated with reference to the following Figures, in which:
Figure 1 shows a device prior to the known device;
Figure 2 shows the known device;
Figure 3 shows the device according to the invention;
Figure 4 shows a second, alternative, embodiment of the device according to the invention
The same components are designated with the same reference numerals.
Each arrow indicates a transport direction of power.

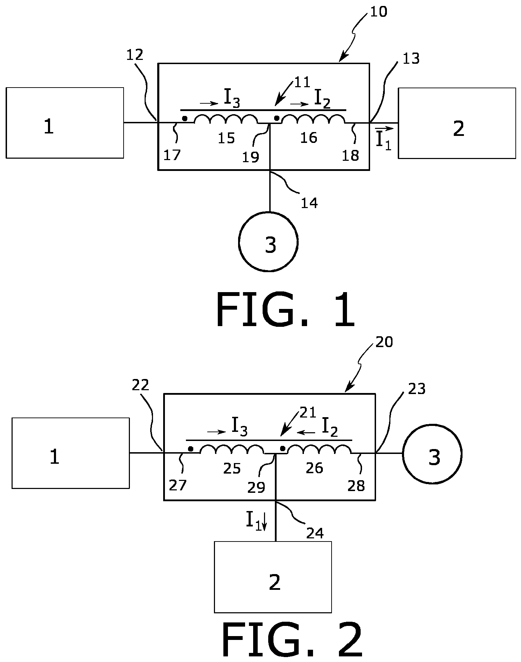

In Figures 1-4 the polarities of the coils are indicated by dots.

Figure 1 shows a device 10 prior to the known device. Device 10 is applied in rotating systems for Uninterruptible Power Supply (UPS). The device 10 is used for connecting a power source 1 and an AC generator 3 to one or more power consuming appliances 2 or load. A UPS secures power delivery to the one or more power consuming appliances 2 in case the supply of power by the power source gets disturbed. Additionally a UPS keeps the voltage at the load at a constant value, disregard variations of the voltage of the power source. The device 10 is provided with a first connecting point 12 intended for electrical connection of the device 10 to a mains supply 1. The device 10 comprises a reactor 11 which comprises a primary and secondary coil 15;16 around a shared magnetic core, wherein the primary coil 15 and secondary coil 16 are connected in series and have the same polarity. A first terminal 17 is connected to an open end of the primary coil 15. A second terminal 18 is connected to an open end of the secondary coil 16. A third terminal 19 is connected to the connecting ends of the primary and secondary coil 15; 16. The first terminal 17 of the reactor 11 is connected to the first connecting point 12 of the device. A second connecting point 13 is arranged for connecting to the one or more power consuming appliances 2 or load, which is internally connected to the second terminal 18 of the reactor 11. A third connecting point 14 is internally connected to the third terminal 19 of the reactor 11. The third connecting point 14 provides a connection point for connecting an AC generator 3. During normal operation of a UPS system comprising the device 10, the device 10 is fed by a power source 1. Subsequently the reactor 11 transports this power to the second connecting point 13. When the power source 1 gets disturbed the UPS system switches off the connection of first connecting point 12 to the power source 1 and starts to produce active power via its own generator 3. During normal operation of the UPS, the generator 3 only has to produce the reactive power consumed by the reactor 11 and the power consuming appliances 2 or load. In normal operation of the UPS, load current I₁ is transported from the first connecting point 12 to the second connecting point 13 through the primary coil 15 and the secondary coil 16.

Figure 2 shows the known device 20. The known device 20 differs from the device 10 of Figure 1 in that the generator 3 is connected to the second connecting point 23 and the power consuming appliances 2 or load are connected to the third connecting point 24. In normal operation of the UPS, load current I₁ is transported from the first connecting point 22 to the third connecting point 24 through only the primary coil 25. Therefore the reactor 21 of the device 20 consumes less reactive power than the reactor 11 of the device 10 of Figure 1. The amount of reactive power to be delivered by the generator 3 is therefore significantly reduced. So a UPS according to Figure 2 will have, compared to UPS in Figure 1, less losses and a better power efficiency.

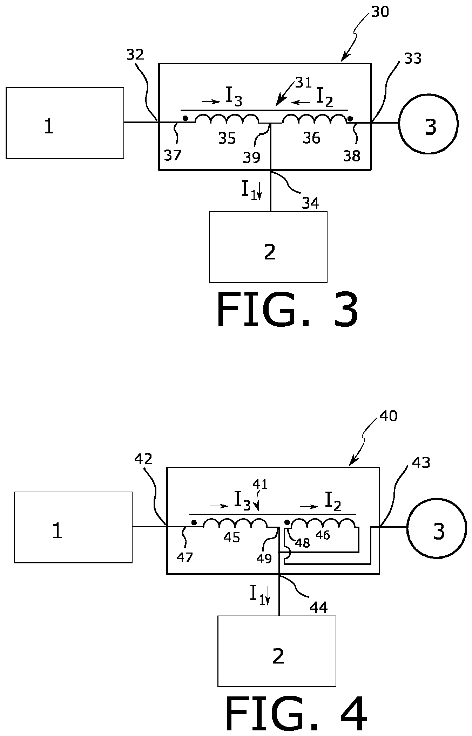

Figure 3 shows a first embodiment of the device 30 according to the invention. The device 30 differs from the device 20 of Figure 2 in that the primary coil 35 and secondary coil 36 have opposite polarity which is achieved by an opposite winding direction of coils 35;36 around the shared magnetic core. The invention is based on the insight that the power loss of a UPS operating in normal operation can be lowered by decreasing the reactive power consumed by the reactor, which is achieved by reducing of the magnetic field in the reactor. Referring to the device 10 of Figure 1 and the device 20 of Figure 2, the induced voltages over the primary coils 15;25 and the secondary coils 16;26 have identical polarity in normal operation of the UPS, while the current I₂ in the secondary coils 16;26 contributes to the magnetic field created by the current I₃ in the primary coil 15;25. Although reactor 21 in Figure 2 has less reactive power consumption than reactor 11 in Figure 1, additional reduction of this reactive power consumption can be achieved by choosing opposite polarities for the primary coil 35 and the secondary coil 36. In Figure 3 the current I₂ in the secondary coil 36 of reactor 31 now decreases the magnetic field created by the current I₃ in the primary coil 35. During normal operation the reactor 31 will therefore consume less reactive power than the reactors 11;21 in Figure 1 and 2, resulting in a better power efficiency for the UPS according to the proposed UPS configuration in Figure 3.

Figure 4 shows a second, alternative, embodiment of the device 40 according to the invention. The device 40 differs from the device 30 of Figure 3 in that the primary coil 45 and secondary coil 46 have an identical winding direction, but an opposite polarity. This is achieved by reversing the terminals 49;48 of the secondary coil 46, wherein the total voltage between points 42 and 43 is composed of 2 opposing voltages induced in the coils 45;46 .

Although the invention has been elucidated above on the basis of a number of embodiments, it will be apparent that it is not limited thereto. More electronic components than shown here could thus be used. The scope of the invention is therefore defined solely by the following claim.

## Claims

1. Device (30;40) for use in an uninterrupted supply of alternating current to one or more power consuming appliances (2), which device (30;40) is provided with
- a first connecting point (32;42) intended for electrical connection of the device to a mains supply (1),
- a reactor (31;41) comprising a primary and secondary coil (35;36, 45;46) around a shared magnetic core, wherein the primary coil (35;45) and secondary coil (36;46) are connected in series,
- a first terminal (37;47) connected to an open end of the primary coil (35;45),
- a second terminal (38;48) connected to an open end of the secondary coil (36;46) and
- a third terminal (39;49) connected to the connecting ends of the primary and secondary coil (35;36, 45;46),
- a second connecting point (34;44) for connecting the one or more power consuming appliances (2),
- a third connecting point (33;43) for connecting an AC generator (3),
wherein
- the first terminal (37;47) is connected to the first connecting point (32;42)
- the second terminal (38;48) is connected to the third connection point (33;43),
- the third terminal (39;49) is connected to the second connection point (34; 44), **characterized in that** the primary coil (35;45) and secondary coil (36;46) have an opposite polarity.
